# EUROPEAN PATENT APPLICATION

(11) **EP 3 893 448 A1**
(43) Date of publication of application: **13.10.2021**
(21) Application number: 20749754.6
(22) Date of filing: 19.01.2020
(51) Int. Cl.: H04L 12/801

(54) **CONGESTION CONTROL METHOD, TERMINAL AND READABLE STORAGE MEDIUM**

(30) Priority: 29.01.2019 CN 201910090245
(71) Applicant: ZTE Corporation, shenzhen Guangdong 518057 (CN)
(72) Inventor: AO, Ting, Shenzhen, Guangdong 518057 (CN); YU, Jinghai, Shenzhen, Guangdong 518057 (CN)
(74) Representative: Canzler & Bergmeier Patentanwälte Partnerschaft mbB
(86) International application number: PCT/CN2020/073034
(87) International publication number: WO 2020/156288

(57) **Abstract**

Disclosed are a congestion control method, a terminal and a readable storage medium. The method comprises: when a congestion occurs in data transmission performed by a downstream apparatus, identifying a congestion flow causing the congestion; acquiring identifier information of the congestion flow, and packaging the identifier information in a congestion control notification message; and sending the congestion control notification message to an upstream apparatus, such that the upstream apparatus performs a congestion control operation according to the congestion control notification message.

## Description

### CROSS-REFERENCE TO RELATED APPLICATION

The present application claims priority from the Chinese patent application No. 201910090245.0 filed with the China Patent Office on January 29, 2019, the entire contents of which are incorporated in the present application by reference.

### TECHNICAL FIELD

The present disclosure relates to the field of communication technologies, and in particular, relates to a congestion control method, a terminal, and a computer-readable storage medium.

### BACKGROUND

When too many packets are present in a certain part of a communication data transmission line to be processed timely in this part of network, a congestion phenomenon is subsequently produced, which may cause reduction in the transmission performance of this part of link and even the whole network, and in severe case, the network communication service is even stopped, namely, a deadlock phenomenon occurs. Therefore, there is an urgent need for a congestion control method that can relieve the pressure of network data transmission in time when a congestion phenomenon occurs in the communication data transmission line, so as to ensure normal operation of data transmission.

Congestion control modes in the related art cannot accurately control an upstream device to perform congestion control according to a target congestion flow causing congestion in a current transmission queue, and cannot ensure complete transmission of message data required by a user after the message transmission is restored, leading to a poor packet loss prevention effect, and a reduced efficiency in the overall congestion control.

### SUMMARY

The present disclosure provides a congestion control method, a terminal, and a computer-readable storage medium that aim to solve technical problems of inaccurate congestion control, poor packet loss prevention effect and thus low congestion control efficiency in the congestion control modes of the related art.

In an embodiment of the present disclosure, there is provided a congestion control method, including:
identifying, in response to that a congestion phenomenon occurs in data transmission of a current downstream device, a congestion flow causing the congestion phenomenon;
acquiring identification information of the congestion flow, and packaging the identification information in a congestion control notification message; and
sending the congestion control notification message to an upstream device that performs a congestion control operation according to the congestion control notification message.

In some implementations, the identifying, in response to that the congestion phenomenon occurs in data transmission of the current downstream device, the congestion flow causing the congestion phenomenon includes:
identifying, in response to that a current queue length of the current downstream device is detected to exceed a preset first threshold, the congestion flow causing the congestion phenomenon of the downstream device at a current time.

In some implementations, the congestion control notification message triggered by the current downstream device carries a control strategy for performing the congestion control operation on the congestion flow, and a validity period of the control strategy.

In some implementations, each piece of identification information carried by the congestion flow includes at least one of: a destination MAC address, a source MAC address, a VLAN tag, a destination IP address, a source IP address, a destination port number, a source port number, and priority information.

In some implementations, the congestion control method includes:
receiving the congestion control notification message sent from the downstream device, and identifying the control strategy; and
adjusting a transmission rate of the congestion flow according to the control strategy.

In some implementations, the adjusting the transmission rate of the congestion flow according to the control strategy includes:
detecting the validity period of the control strategy in the congestion control notification message;
adjusting, in response to that an actual control duration time of the upstream device on the congestion flow is detected to be within the validity period, the transmission rate within a preset transmission rate proportion range; and
terminating the congestion control operation in response to that the actual control duration time is detected to exceed the validity period, so as to restore the transmission rate of the congestion flow.

In some implementations, after the sending the congestion control notification message to the upstream device that performs the congestion control operation according to the congestion control notification message, the method further includes:
receiving a congestion control restore message sent from the downstream device in response to that the downstream device detects the data transmission satisfying a preset condition, and terminating the congestion control operation according to the congestion control restore message.

In some implementations, the receiving the congestion control restore message sent from the downstream device in response to that the downstream device detects the data transmission satisfying the preset condition, and terminating the congestion control operation according to the congestion control restore message includes:
receiving the congestion control restore message triggered by the downstream device in response to that the downstream device detects that a current queue length is less than a preset second threshold; and
terminating the congestion control operation according to the congestion control restore message to restore the transmission rate of the congestion flow.

The present disclosure further provides a terminal, including: a memory, a processor and a congestion control program stored on the memory and executable on the processor, the congestion control program, executed by the processor, causing the congestion control method as described above to be implemented.

The present disclosure further provides a computer-readable storage medium having a congestion control program stored thereon, the congestion control program, executed by a processor, causing the congestion control method as described above to be implemented.

The congestion control method, the terminal and the computer-readable storage medium provided by embodiments of the present disclosure identify, when a congestion phenomenon occurs in a transmission queue of a current downstream device, a congestion flow causing the congestion phenomenon; acquire identification information of the congestion flow and package the identification information in a congestion control notification message; and send the congestion control notification message to an upstream device that performs a congestion control operation according to the congestion control notification message. In the embodiments of the present disclosure, when a length of a queue passing through the current downstream device is detected to exceed a preset first threshold, it is determined that a congestion phenomenon occurs in the data transmission of the current downstream device, and then identification information of the congestion flow causing the congestion phenomenon in the data transmission of the current downstream device is identified and packaged in a congestion control notification message triggered by the current downstream device, the congestion control notification message is sent to an upstream device connected with the current downstream device, and the upstream device adjusts the transmission rate of the congestion flow according to the control strategy for the current congestion flow carried in the congestion control notification message. The embodiments of the present disclosure enable accurately sending the congestion control notification message triggered by the current downstream device to the upstream device according to the identification information carried by the congestion flow causing the congestion phenomenon of the current downstream device, so that the upstream device adjusts the transmission rate of the current congestion flow within the preset transmission rate proportion range according to the control strategy for the congestion control operation on the current congestion flow in the congestion control notification message, namely, pauses sending of the current congestion flow or sends the current congestion flow at a reduced rate; and accurately performing congestion control on the congestion flow causing the congestion phenomenon of the current downstream device, so that the packet loss prevention effect of the congestion control is enhanced, an additional congestion control mode of sending the congestion flow at a reduced rate is added, and the overall efficiency of the congestion control is improved.

### BRIEF DESCRIPTION OF THE DRAWINGS

FIG. 1 is a schematic structural diagram of a terminal in a hardware operating environment involved in an embodiment of the present disclosure;
FIG. 2 is a schematic flowchart of a congestion control method according to an embodiment of the present disclosure;
FIG. 3 is a detailed schematic flowchart illustrating a congestion control method according to an embodiment of the present disclosure;
FIG. 4 is a schematic flowchart of a congestion control method according to an embodiment of the present disclosure;
FIG. 5 is a schematic diagram of a PFC frame format in a congestion control method according to an embodiment of the present disclosure; and
FIG. 6 is a schematic diagram illustrating an application scenario of a congestion control method according to an embodiment of the present disclosure.

### DETAILED DESCRIPTION

It will be appreciated that the specific embodiments described herein are merely for illustration of the present disclosure and are not intended to limit the present disclosure.

The main solution provided in the embodiments of the present disclosure includes: identifying, when a congestion phenomenon occurs in a transmission queue of a current downstream device, a congestion flow causing the congestion phenomenon; acquiring identification information of the congestion flow, and packaging the identification information in a congestion control notification message; and sending the congestion control notification message to an upstream device that performs a congestion control operation according to the congestion control notification message.

Congestion control modes in the related art cannot accurately perform congestion control operations on the congestion flow causing the congestion phenomenon, and cannot ensure complete transmission of message data required by a user after the congestion control is restored, leading to a poor packet loss prevention effect, and a reduced efficiency in the overall congestion control. The present disclosure provides a solution that can accurately perform congestion control on the congestion flow causing the congestion phenomenon of the current downstream device, so that the packet loss prevention effect of the congestion control is enhanced, an additional congestion control mode of sending the congestion flow at a reduced rate is added, and the overall efficiency of the congestion control is improved.

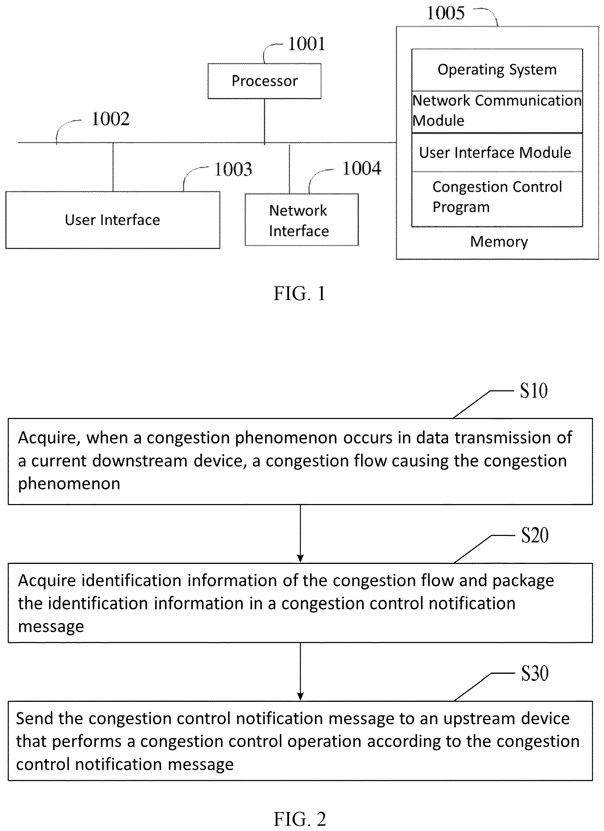

As shown in FIG. 1, FIG. 1 is a schematic structural diagram of a terminal in a hardware operating environment involved in an embodiment of the present disclosure.

The terminal in the embodiment of the present disclosure may be various network terminals, such as a wireless router, a Personal Computer (PC), or may be a mobile terminal device including a smartphone, a tablet, an e-book reader, an MP3 (Moving Picture Experts Group Audio Layer III) player, an MP4 (Moving Picture Experts Group Audio Layer IV) player, a digital broadcast receiver, a wearable device (such as a smart bracelet, a smart watch, and the like), a navigation device, a portable computer, and a portable terminal device, or may be a non-movable terminal device.

As shown in FIG. 1, the terminal may include: a processor 1001, such as a central processing unit (CPU), a network interface 1004, a user interface 1003, a memory 1005, and a communication bus 1002. The communication bus 1002 is configured to enable connective communication between these components. The user interface 1003 may include a display, and an input unit such as a keyboard, and may further include a standard wired or wireless interface. The network interface 1004 may include a standard wired interface or a standard wireless interface (e.g., a WI-FI interface). The memory 1005 may be a high-speed random access memory (RAM) or a stable memory (a non-volatile memory) such as a magnetic disk memory. The memory 1005 may be a storage device separate from the processor 1001 as described above.

Those skilled in the art will appreciate that the structure of the terminal shown in FIG. 1 is not intended to be limiting, and the terminal may include more or fewer components than shown, or a combination of some components, or a different arrangement of components.

As shown in FIG. 1, the memory 1005, as a computer storage medium, may include an operating system, a network communication module, a user interface module, and a congestion control program.

In the terminal shown in FIG. 1, the network interface 1004 is mainly configured to be connected to a backend server and perform data communication with the backend server; the user interface 1003 is mainly configured to be connected to a client (customer premise) and perform data communication with the client (customer premise); and the processor 1001 may be configured to invoke the congestion control program stored on the memory 1005 and perform the operations of:
identifying, when a congestion phenomenon occurs in a transmission queue of a current downstream device, a congestion flow causing the congestion phenomenon;
acquiring identification information of the congestion flow, and packaging the identification information in a congestion control notification message; and
sending the congestion control notification message to an upstream device that performs a congestion control operation according to the congestion control notification message.

In some implementations, the identifying, when the congestion phenomenon occurs in the data transmission of the current downstream device, the congestion flow causing the congestion phenomenon includes:
identifying, when a current queue length of the current downstream device is detected to exceed a preset first threshold, the congestion flow causing the congestion phenomenon of the downstream device.

In some implementations, the congestion control notification message triggered by the current downstream device carries a control strategy for performing the congestion control operation on the congestion flow, and a validity period of the control strategy.

In some implementations, each piece of identification information carried by the congestion flow includes at least one of: a destination Media Access Control (MAC) address, a source MAC address, a Virtual Local Area Network (VLAN) tag, a destination Internet Protocol (IP) address, a source IP address, a destination port number, a source port number, and priority information.

In some implementations, the congestion control method further includes:
receiving the congestion control notification message sent from the downstream device, and identifying the control strategy; and
adjusting a transmission rate of the congestion flow according to the control strategy.

In some implementations, the adjusting the transmission rate of the congestion flow according to the control strategy includes:
acquiring the validity period of the control strategy in the congestion control notification message;
adjusting, when an actual control duration time of the upstream device on the congestion flow is detected to be within the validity period, the transmission rate within a preset transmission rate proportion range; and
terminating the congestion control operation when the actual control duration time is detected to exceed the validity period, so as to restore the transmission rate of the congestion flow.

In some implementations, after the sending the congestion control notification message to the upstream device that performs the congestion control operation according to the congestion control notification message, the method further includes:
receiving a congestion control restore message sent from the downstream device when the downstream device detects the data transmission satisfying a preset condition, and terminating the congestion control operation according to the congestion control restore message.

In some implementations, the receiving the congestion control restore message sent from the downstream device when the downstream device detects the data transmission satisfying the preset condition, and terminating the congestion control operation according to the congestion control restore message includes:
receiving the congestion control restore message triggered by the downstream device when the downstream device detects that a current queue length is less than a preset second threshold; and
terminating the congestion control operation according to the congestion control restore message to restore the transmission rate of the congestion flow.

Based on the above hardware structure, implementations of the congestion control method of the present disclosure are proposed.

Referring to FIG. 2, in an implementation of the congestion control method of the present disclosure, the congestion control method includes the following steps S10 to S30.

At step S10, when a congestion phenomenon occurs in data transmission of a current downstream device, a congestion flow causing the congestion phenomenon is identified.

When a data congestion phenomenon is detected in the data transmitted from a sending port of the current downstream device, the congestion flow causing the congestion phenomenon in the current data transmission is detected and identified.

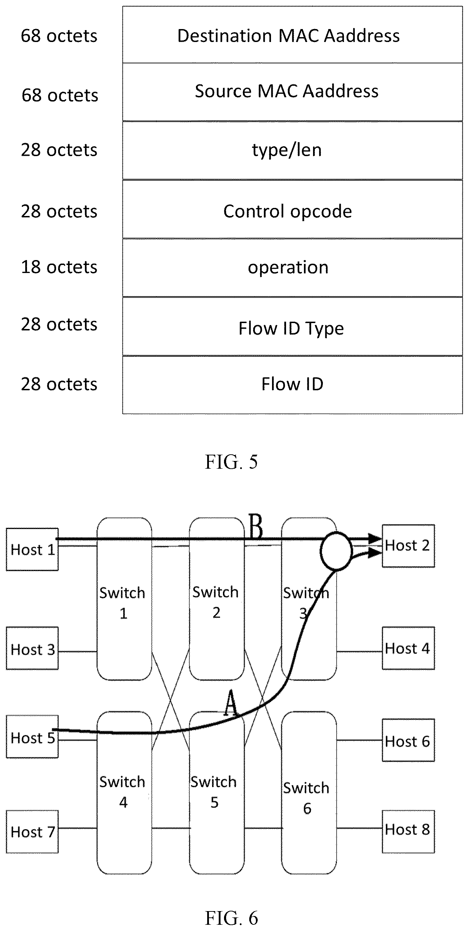

Specifically, for example, in the application scenario shown in FIG. 6, when a congestion phenomenon of data transmission is detected at a sending port of the current downstream device, i.e., "switch 3", that sends "traffic flow A" and "traffic flow B" to "host 2", a traffic flow identification algorithm is invoked to identify whether the congestion phenomenon of the current data transmission is caused by "traffic flow A" that currently passes through "switch 3", or caused by "traffic flow B".

In some implementations, the step S10 includes:
step S101, identifying, when a queue length of the current downstream device is detected to exceed a preset first threshold, the congestion flow causing the congestion phenomenon of the downstream device.

When the current downstream device detects that the queue length of the current data transmission satisfies a preset threshold condition, the congestion flow in the current transmission queue causing the congestion phenomenon in the current downstream device is identified.

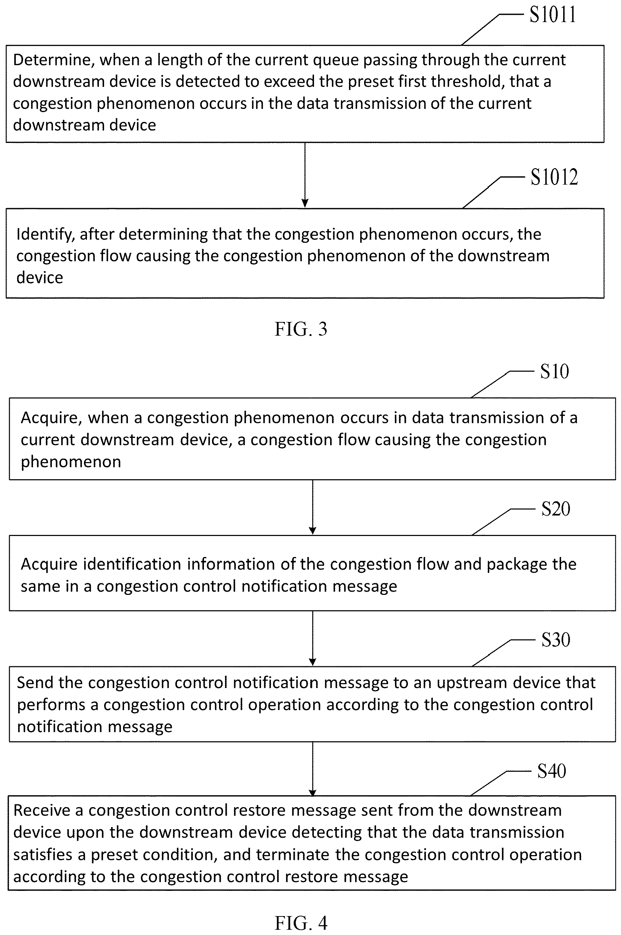

In some implementations, as shown in FIG. 3, the step S101 includes the following steps S1011 to S1012.

At step S1011, when a length of the current queue passing through the current downstream device is detected to exceed the preset first threshold, it is determined that a congestion phenomenon occurs in the data transmission of the current downstream device.

When the current downstream device detects that the length of the queue sent through a data transmission port exceeds the preset first threshold, it is determined that a congestion phenomenon occurs at the data transmission port of the current downstream device.

It should be noted that the preset first threshold is a maximum queue length threshold preset according to the data transmission performance of the current downstream device itself, and is configured to judge whether a congestion phenomenon occurs at the data transmission port of the current downstream device.

Specifically, for example, in the application scenario shown in FIG. 6, when "switch 3" detects that, for "traffic flow A" and "traffic flow B" currently sent to "host 2" at the sending port of "switch 3", sizes of message traffic flows in the queues of "traffic flow A" and "traffic flow B" exceed a preset first queue length threshold configured to judge whether a congestion phenomenon occurs at the data transmission port of the current "switch 3", it is determined that a congestion phenomenon occurs in "traffic flow A" and "traffic flow B" currently transmitted through "switch 3".

At step S1012, after determining that the congestion phenomenon occurs, the congestion flow causing the congestion phenomenon of the downstream device at a current time is identified.

When it is determined that the congestion phenomenon occurs at the data transmission port of the current downstream device, the congestion flow in a transmission queue of the current downstream device causing the congestion phenomenon at the current time is identified.

Specifically, for example, in the application scenario shown in FIG. 6, after determining that a congestion phenomenon occurs in "traffic flow A" and "traffic flow B" in the transmission queue currently transmitted through "switch 3", an identification algorithm is invoked to identify, when a congestion phenomenon is detected in transmission of "traffic flow A" and "traffic flow B" through "switch 3" at the current time, the congestion flow, i.e., "traffic flow A", in the transmission queue of "switch 3" that causes the current congestion phenomenon in the data transmission of "switch 3".

At step S20, identification information of the congestion flow is acquired and packaged in a congestion control notification message.

After the congestion flow causing the congestion phenomenon in the data transmission of the current downstream device is determined, the identification information carried in the current congestion flow is analyzed and read, and then packaged in the congestion control notification message triggered by the current downstream device.

It should be noted that the identification information carried in the congestion flow includes, but is not limited to, a destination Media Access Control (MAC) address, a source MAC address, a Virtual Local Area Network (VLAN) tag, a destination Internet Protocol (IP) address, a source IP address, a destination port number, a source port number, priority information, or any combination thereof. The congestion control notification message triggered by the current downstream device carries a control strategy for performing the congestion control operation on the congestion flow, and a validity period of the control strategy. The congestion control notification message triggered by the current downstream device is a Priority-based Flow Control (PFC) frame as shown in FIG. 5.

Specifically, for example, in the application scenario shown in FIG. 6, after the current downstream device, i.e., "switch 3", determines that the congestion flow causing the congestion phenomenon in the data transmission is "traffic flow A", the destination MAC address, the source MAC address, the VLAN tag, the destination IP address, the source IP address, the destination port number, the source port number, and the priority information of the current traffic flow carried in the current "traffic flow A" are detected and read, and then packaged in a "Control opcode" (MAC control operation code) field of the PFC frame shown in FIG. 5 triggered by the current downstream device (i.e., "switch 3") upon the downstream device detecting the congestion phenomenon in the transmission of "traffic flow A" and "traffic flow B", which is configured to identify the control strategy for the congestion control operation on the congestion flow, i.e., "traffic flow A", and the validity period of the control strategy is packaged into a "time" (control operation duration time) field of the PFC frame.

In some implementations, the packaging the identification information in the congestion control notification message includes the following steps S21 to S22.

At step S21, each piece of the identification information carried in the congestion flow is analyzed and identified.

For the congestion flow causing the congestion phenomenon in the data transmission of the current downstream device determined by the current downstream device, each piece of the identification information carried in the congestion flow is analyzed, identified and acquired.

Specifically, for example, after the current downstream device, i.e., "switch 3", determines that the congestion flow causing the congestion phenomenon in the data transmission is "traffic flow A", the destination MAC address, the source MAC address, the VLAN tag, the destination IP address, the source IP address, the destination port number, the source port number, and the priority information of the current traffic flow carried in the current "traffic flow A" are identified and extracted.

At step S22, each piece of the identification information is filled in a control frame of the congestion control notification message triggered by the current downstream device.

Each piece of the identified and acquired identification information carried in the congestion flow is filled in the control frame of the congestion control notification message triggered by the current downstream device.

It should be noted that: the congestion control frame in the congestion control notification message includes, but is not limited to: a new pause control frame, i.e., CI-PAUSE+, obtained by expanding from a CI-PAUSE frame based on the congestion flow according to the original PFC protocol, or a brand-new congestion flow control frame, i.e., DEGRADE (rate reduction control), re-defined by expanding the PFC protocol.

Specifically, for example, in the PFC frame format shown in FIG. 5, the destination MAC address, the source MAC address, the VLAN tag, the destination IP address, the source IP address, the destination port number, the source port number, and the priority information acquired from "traffic flow A", which is determined as the congestion flow causing the congestion phenomenon in the data transmission by "switch 3", are each filled into positions in a format table of a congestion control notification message, i.e., "PFC PAUSE" frame, triggered by the current downstream device (i.e., "switch 3") upon the downstream device detecting the congestion phenomenon in transmission of "traffic flow A" and "traffic flow B", corresponding to "Destination Mac Address", "Source Mac Address", "type/len (type field or Ethernet frame length)", "Control opcode (MAC control operation code)", "operation (operation content field)", "Flow ID Type (congestion flow identification type)", and "Flow ID (congestion Flow identification)", respectively.

At step S30, the congestion control notification message is sent to an upstream device that performs a congestion control operation according to the congestion control notification message.

The congestion control notification message triggered by the current downstream device is sent to an upstream device connected with the current downstream device so that the upstream device receiving the congestion control notification message can carry out the congestion control operation on the current congestion flow according to the congestion control notification message.

Specifically, for example, in the application scenario shown in FIG. 6, the congestion control notification message triggered by the current downstream device, i.e., "switch 3", upon the downstream device detecting the congestion phenomenon in transmission of "traffic flow A" and "traffic flow B", is reported from a data receiving port of the current downstream device to an upstream device, i.e., "switch 5", connected with the current downstream device, i.e., "switch 3", in the transmission path, i.e., "host 5 -- switch 4 -- switch 5 -- switch 3 -- host 2", of the current congestion flow, i.e., "traffic flow A", so that the upstream device, i.e., "switch 5", performs a congestion control operation on the current congestion flow, i.e., "traffic flow A", according to the congestion control notification message triggered by "switch 3".

In some implementations, the congestion control method of the present disclosure further includes the following steps A and B.

At step A, the congestion control notification message sent from the downstream device is received, and the control strategy is identified.

After receiving the congestion control notification message triggered by the downstream device, the upstream device identifies and acquires a congestion control strategy in the congestion control notification message for performing congestion control on the congestion flow currently sent by the upstream device.

Specifically, for example, after receiving the congestion control notification message, i.e., "PFC PAUSE" frame, triggered by "switch 3" upon "switch 3" detecting the congestion phenomenon in transmission of "traffic flow A" and "traffic flow B", the upstream device, i.e., "switch 5", reads a congestion control strategy in the congestion control notification message, i.e., "PFC PAUSE" frame (a Priority-based Flow Control Protocol frame), for the congestion flow, i.e., "traffic flow A", currently sent by "switch 5".

At step B, a transmission rate of the congestion flow is adjusted according to the control strategy.

According to the congestion control strategy read from the congestion control notification message, the data transmission rate of the current congestion flow is adjusted within a preset transmission rate proportion range for sending the current congestion flow.

It should be noted that the preset transmission rate proportion range is a preset transmission rate proportion range, e.g., "from 0% to 100%", of the current congestion flow based on a standard rate of the current upstream device for data transmission, which when equals to "0%", causes suspension of the transmission of the current congestion flow, and when equals to " 100%", causes restoration of the transmission of the current congestion flow. That is, the current congestion flow is transmitted according to the standard rate of the current upstream device for data transmission.

Specifically, for example, after a congestion control strategy in the congestion control notification message, i.e., "PFC PAUSE" frame, for the congestion flow, i.e., "traffic flow A", currently sent by "switch 5" is read, the data transmission rate of the current congestion flow, i.e., "traffic flow A", is adjusted according to the congestion control strategy within the preset transmission rate proportion range, i.e., "from 0% to 100%", for sending the current congestion flow.

In some implementations, the step B includes steps B1 to B3.

At step B1, the validity period of the congestion flow control strategy in the congestion control notification message is acquired.

The information indicating a validity period of the congestion control operation performed on the congestion flow sent by the current upstream device is detected in the congestion control strategy read from the congestion control notification message, and a preset control duration time of the congestion control operation performed on the congestion flow is acquired from the information indicating the validity period.

Specifically, for example, in the congestion control strategy read from the congestion control notification message, i.e., "PFC PAUSE" frame, for the congestion flow, i.e., "traffic flow A", currently sent by "switch 5", a "time" field indicating a validity period of the congestion control operation performed by the current upstream device, i.e., "switch 5", on the sent congestion flow, i.e., "traffic flow A", is detected in the "PFC PAUSE frame", and a preset control duration time of the congestion control operation performed on the congestion flow therein is calculated.

At step B2, when an actual control duration time of the upstream device on the congestion flow is detected to be within the validity period, the transmission rate is adjusted within the preset transmission rate proportion range.

The actual control duration time of the congestion control on the current congestion flow by the current upstream device is detected, and when the actual control duration time is detected to be less than or equal to the preset control duration time in the congestion control strategy, the transmission rate of the current congestion flow is adjusted within the preset transmission rate proportion range for sending the current congestion flow.

Specifically, the actual control duration time till the current time of the congestion control operation performed by the current upstream device, i.e., "switch 5", on the sent congestion flow, i.e., "traffic flow A", is detected. when the actual control duration time is detected to be less than or equal to the preset control duration time of the congestion control operation performed by the current upstream device, i.e., "switch 5", on the sent congestion flow, i.e., "traffic flow A", suggested in the "PFC PAUSE frame", the data transmission rate of the current congestion flow, i.e., "traffic flow A", is adjusted within the preset transmission rate proportion range, i.e., "from 0% to 100%", for sending the current congestion flow. For example, when the transmission rate of the current congestion flow is adjusted to "0%", the transmission of the current congestion flow is suspended, or, when the transmission rate of the current congestion flow is adjusted to "50%", the current congestion flow is transmitted at half of the standard rate of the current upstream device, i.e., "switch 5", for data transmission.

At step B3, the congestion control operation is terminated when the actual control duration time is detected to exceed the validity period, to restore the preset standard rate of the congestion flow.

When the actual control duration time is detected to exceed the validity period in the congestion control strategy, the transmission rate of the current congestion flow is directly adjusted to the maximum proportion in the preset transmission rate proportion range.

It should be noted that the transmission rate of the current congestion flow is a standard rate of the congestion flow transmitted by the current upstream device before performing the congestion control operation on the congestion flow.

Specifically, for example, when it is detected that the actual control duration time till the current time of the congestion control operation performed by the current upstream device, i.e., "switch 5", on the sent congestion flow, i.e., "traffic flow A", exceeds the control operation duration time of the congestion control operation performed by the current upstream device, i.e., "switch 5", on the sent congestion flow, i.e., "traffic flow A" indicated by the "time" field in the "PFC PAUSE frame", the transmission rate of the current congestion flow is adjusted directly to the maximum proportion, i.e., "100%". That is, the current congestion flow is transmitted at the standard rate of the current upstream device, i.e., "switch 5", for data transmission.

In the embodiment, when a congestion phenomenon occurs in a transmission queue of a current downstream device, a congestion flow causing the congestion phenomenon is identified; identification information of the congestion flow is acquired and packaged in a congestion control notification message; and the congestion control notification message is sent to an upstream device that performs a congestion control operation according to the congestion control notification message.

In the embodiment, when the current downstream device detects that the length of the queue sent through a data transmission port exceeds the preset first threshold, it is determined that a congestion phenomenon occurs at the data transmission port of the current downstream device; when it is determined that the congestion phenomenon occurs at the data transmission port of the current downstream device, the congestion flow in a transmission queue of the current downstream device causing the congestion phenomenon at the current time is identified; for the congestion flow causing the congestion phenomenon in the data transmission of the current downstream device determined by the current downstream device, identification information carried in the congestion flow is identified and acquired, each piece of the acquired identification information carried in the congestion flow is filled in the congestion control notification message triggered by the current downstream device; the congestion control notification message is sent to an upstream device connected with the current downstream device, and after receiving the congestion control notification message triggered by the downstream device, the upstream device reads a congestion control strategy in the congestion control notification message for performing congestion control on the congestion flow currently sent by the upstream device; and according to the congestion control strategy read from the congestion control notification message, the data transmission rate of the current congestion flow is adjusted within a preset transmission rate proportion range for sending the current congestion flow.

The embodiment enables accurately sending the congestion control notification message triggered by the current downstream device to the upstream device according to the identification information carried by the congestion flow causing the congestion phenomenon of the current downstream device, so that the upstream device adjusts the transmission rate of the current congestion flow within the preset transmission rate proportion range according to the congestion control strategy, for the current congestion flow, in the congestion control notification message, namely, pauses sending of the current congestion flow or sends the current congestion flow at a reduced rate; and accurately performing congestion control on the congestion flow causing the congestion phenomenon of the current downstream device, so that the packet loss prevention effect of the congestion control is enhanced, an additional congestion control mode of sending the congestion flow at a reduced rate is added, and the overall efficiency of the congestion control is improved.

Referring to FIG. 4, in an implementation of the congestion control method of the present disclosure, after the sending the congestion control notification message to the upstream device that performs the congestion control operation according to the congestion control notification message, the congestion control method of the present disclosure may further include step S40.

At step S40, a congestion control restore message sent from the downstream device when the downstream device detects that the data transmission satisfies a preset condition is received, and the congestion control operation is terminated according to the congestion control restore message.

When the current downstream device detects that the data transmission of the current data transmission port satisfies the preset condition, a congestion control restore message is triggered and sent to the upstream device so that the upstream device terminates the congestion control operation on the congestion flow.

It should be noted that the preset condition is a threshold condition preset according to the data transmission performance of the current downstream device itself and for judging whether the data transmission port of the current downstream device is released from the current congestion state.

Specifically, for example, in the networking application scenario shown in FIG. 6, when the current downstream device, i.e., "switch 3", detects that a length of the queue passing through the data transmission port of the current downstream device, i.e., "switch 3", satisfies the threshold condition preset for judging whether the data transmission port of the current downstream device is released from the current congestion state, a congestion control restore message for releasing the current congestion flow, i.e., "traffic flow A", from the congestion control operation is triggered and reported to the upstream device, i.e., "switch 5", so that the upstream device, i.e., "switch 5", stops the congestion control operation on the current congestion flow, i.e., "traffic flow A", according to the congestion control restore message.

In some implementations, the step S40 further includes steps S41 to S42.

At step S41, a congestion control restore message triggered by the downstream device when the downstream device detects that a current queue length is less than a preset second threshold is received.

The current upstream device receives a congestion control restore message triggered by the current downstream device upon the downstream device detecting that the length of the queue sent through the data transmission port is less than a preset second threshold.

It should be noted that the preset second threshold is a minimum queue length threshold preset according to the data transmission performance of the current downstream device itself and for judging whether the data transmission port of the current downstream device is released from the current congestion state.

Specifically, for example, in the application scenario shown in FIG. 6, when "switch 3" detects that, for "traffic flow A" and "traffic flow B" currently sent to "host 2" at the sending port of "switch 3", queue lengths of "traffic flow A" and "traffic flow B" at the current time are less than the minimum queue length threshold preset for judging whether the data transmission port of the current downstream device is released from the current congestion state, a congestion control restore notification for releasing the current congestion flow, i.e., "traffic flow A", from the congestion control operation is triggered, and the congestion control restore message is acquired.

At step S42, the congestion control operation is terminated according to the congestion control restore message to restore the transmission rate of the congestion flow.

In the transmission path of the current congestion flow, the upstream device, which is connected to the current downstream device and located at an upstream end of the current downstream device, adjusts the transmission rate to the maximum proportion in the preset transmission rate proportion range according to the acquired congestion control restore message, i.e., terminates the congestion control operation to restore the transmission rate of the congestion flow.

Specifically, for example, according to the "transmission path information" indicating a transmission path, "host 5 -- switch 4 -- switch 5 -- switch 3 -- host 2", of the current congestion flow, i.e., "traffic flow A", the congestion control restore notification triggered by the current downstream device, i.e., "switch 3", at the current time is reported to the upstream device, i.e., "switch 5", that is connected to the current downstream device, i.e., "switch 3", in the transmission path "host 5switch 4 -- switch 5 -- switch 3 -- host 2" and that is located upstream of "switch 3 ", so that the current upstream device, i.e., "switch 5", terminates the congestion control operation on the congestion flow, i.e., "traffic flow A", according to the congestion control restore message, or directly adjusts the transmission rate of the current congestion flow to the maximum proportion, i.e., "100%". That is, the current congestion flow is transmitted at the standard rate of the current upstream device, i.e., "switch 5", for data transmission.

In the embodiment, a congestion control restore message sent from the downstream device upon the downstream device detecting that the data transmission satisfies a preset condition is received, and the congestion control operation is terminated according to the congestion control restore message; a congestion control restore message triggered by the downstream device when the downstream device detects that a current queue length is less than a preset second threshold is received; and the congestion control operation is terminated according to the congestion control restore message to restore the transmission rate of the congestion flow.

In the embodiment, when the current downstream device detects that the data transmission of the current data transmission port satisfies the preset condition, a congestion control restore message is triggered and sent to the upstream device so that the upstream device terminates the congestion control operation on the congestion flow; when the current downstream device detects that the length of the queue sent through the data transmission port is less than the preset second threshold, a congestion control restore message is triggered and sent to an upstream device connected with the current downstream device in the transmission path of the current congestion flow, so that the upstream device adjusts the transmission rate to the maximum proportion in the preset transmission rate proportion range according to the received congestion control message to restore the standard rate of the congestion flow for data transmission.

The embodiment enables the downstream device to perform autonomous detection of the congestion state of the current data transmission in real time, and when detecting that the congestion state of the data transmission at the current time is released, actively trigger a congestion control restore message for releasing the current congestion flow from the congestion control, and sending the congestion control restore message to an upstream device that is performing the congestion control operation on the congestion flow so that the upstream device terminates the congestion control operation on the congestion flow, thereby avoiding continuous suspension or lower-rate transmission operations during a preset control time set in the congestion control notification message, reducing duration time of the congestion control on the congestion flow, and further improving the congestion control efficiency.

Further, another implementation of the congestion control method of the present disclosure is provided. In the application scenario shown in FIG. 6, when the current downstream device "switch 3" has an instantaneous flow in a unit time exceeding a preset first threshold, it is identified that "traffic flow A" is a congestion flow causing congestion of "switch 3", and then, according to a strategy, the current downstream device "switch 3" sends a congestion control notification message, i.e., "PFC PAUSE frame" for degraded transmission the congestion flow, i.e., "traffic flow A". In the congestion control notification message, i.e., "PFC PAUSE frame" for degraded transmission triggered by "switch 3":
a value in the field of Control Opcode indicates a CI-PAUSE & DEGRADE control frame;
Flow ID Type =0X0E00E00, indicates that the content of the following Flow ID is source MAC + destination MAC + VLAN;
Flow ID has the value: 0001.2A45.345D.4567 + 0001.2B78.356C.479D + 100, because "PFC PAUSE frame" at this time is a degrade control frame, the highest bit of Operation is 1, while the value of the lower 7 bits is 50, indicating that the upstream device of the system is slowed down to 50% of the original transmission rate; and
the field "time" indicates duration time of "traffic flow A" transmitted at 50% of the preset transmission rate proportion, and transmission at the original rate is restored after the duration time exceeds the value indicated by the field "time".

In some implementations, when the current downstream device "switch 3" has an instantaneous flow in a unit time exceeding a preset first threshold, it is identified that "traffic flow A" is a congestion flow causing congestion of "switch 3", and then, according to a strategy, the current downstream device "switch 3" sends a congestion control notification message, i.e., "PFC PAUSE frame" for degraded transmission of the congestion flow, i.e., "traffic flow A". In the congestion control notification message, i.e., "PFC PAUSE frame" for degraded transmission triggered by "switch 3":
a value in the field of "Control Opcode" indicates a DEGRADE control frame; Flow ID Type = 0x0E00, indicates that the content of the following Flow ID is source MAC + destination MAC + VLAN;
for example, Flow ID has the value: 0001.2A45.345D.4567 + 0001.2B78.356C.479D + 100, the field "Reduce" field has a value 50, indicating that the upstream device of the system is slowed down to 50% of the original transmission rate; and
the field "time" indicates duration time of "traffic flow A" transmitted at 50% of the preset transmission rate proportion, and transmission at the original rate is restored after the duration time exceeds the value indicated by the field "time".

In some implementations, the congestion control message, i.e., "PFC PAUSE frame", of "switch 3" does not carry any time limit information, but control of restoring the congestion flow is automatically triggered according to a queue threshold of the current downstream device, i.e., "switch 3".

For example, a preset second threshold, i.e., a restore threshold, is set at an egress port of the current "switch 3", when the port queue is reduced to a certain threshold, switch 3 will send a congestion control restore message to an upstream device "switch 2" in the current path, which restores transmission of the flow to the original rate or continues the transmission according to the control strategy carried in the control restore message.

For example, referring to the scenario schematic diagram shown in FIG. 6, after "switch 3" detects "traffic flow A" as a congestion flow and sends a congestion control notification message for pausing or reducing rate to the upstream device, i.e., "switch 2", transmission of "traffic flow A" is stopped, and when the egress port data transmission rate of "switch 3" is reduced to the preset second threshold, i.e., the "restore threshold", "switch 3" sends a restore message to switch 2, and the red flow is restored to be transmitted at the original rate. At this time, in the congestion control restore message: a value in the field of "Control Opcode" indicates a RESTORE control frame; Flow ID Type = 0x0E00, indicates that the content of the following Flow ID is source MAC + destination MAC + VLAN, Flow ID has the value: 0001.2A45.345D.4567 + 0001.2B78.356C.479D + 100.

In addition, in an embodiment of the present application, there is further provided a computer-readable storage medium having a congestion control program stored thereon, the congestion control program, when executed by a processor, causing the congestion control method as described above to be implemented.

For the specific implementation of the computer-readable storage medium of the present disclosure, reference may be made to the embodiment of the congestion control method described above, which will not be repeated herein again.

It should be noted that the term "include", "comprise" or any variant thereof used herein means to be non-exclusive so that a process, method, item or system including a series of elements includes not only said elements, but also other elements not explicitly listed, or inherent elements of such process, method, item or system. In the absence of more limitations, an element defined by "comprising a ..." do not exclude the existence of additional identical elements in the process, method, item or system including the element.

The embodiments of the present disclosure are for description only and are not distinguished in preferences.

Through the description of the above implementations, those skilled in the art can clearly understand that the method according to the above embodiment may be implemented by means of software plus a necessary general hardware platform. Obviously, it may also be implemented by hardware, in most cases, the former is preferable. The technical solution of the present disclosure may be embodied in the form of a software product, where the computer software product is stored in a storage medium (such as ROM/RAM, magnetic disk, optical disk) as described above, and includes several instructions for enabling a terminal device (which may be a mobile phone, a computer, a server, an air conditioner, or a network device, etc.) to execute the method according to the embodiment of the present disclosure.

## Claims

1. A congestion control method, comprising:
identifying, in response to that a congestion phenomenon occurs in data transmission of a downstream device, a congestion flow causing the congestion phenomenon;
acquiring identification information of the congestion flow, and packaging the identification information in a congestion control notification message; and
sending the congestion control notification message to an upstream device that performs a congestion control operation according to the congestion control notification message.

2. The congestion control method according to claim 1, wherein the identifying, in response to that the congestion phenomenon occurs in the data transmission of the downstream device, the congestion flow causing the congestion phenomenon comprises:
identifying, in response to that a queue length of the downstream device is detected to exceed a preset first threshold, the congestion flow causing the congestion phenomenon of the downstream device.

3. The congestion control method according to claim 1, wherein the congestion control notification message triggered by the downstream device carries: a control strategy for performing the congestion control operation on the congestion flow, and a validity period of the control strategy.

4. The congestion control method according to claim 3, wherein the identification information carried by the congestion flow comprises at least one of: a destination MAC address, a source MAC address, a VLAN tag, a destination IP address, a source IP address, a destination port number, a source port number, and priority information.

5. The congestion control method according to any of claims 1 to 4, further comprising:
receiving the congestion control notification message sent from the downstream device, and identifying the control strategy; and
adjusting a transmission rate of the congestion flow according to the control strategy.

6. The congestion control method according to claim 5, wherein the adjusting the transmission rate of the congestion flow according to the control strategy comprises:
acquiring the validity period of the control strategy in the congestion control notification message;
adjusting, in response to that an actual control duration time of the upstream device on the congestion flow is detected to be within the validity period, the transmission rate of the congestion flow within a preset transmission rate proportion range; and
terminating the congestion control operation in response to that the actual control duration time is detected to exceed the validity period, so as to restore the transmission rate of the congestion flow.

7. The congestion control method according to claim 1, wherein after sending the congestion control notification message to the upstream device that performs the congestion control operation according to the congestion control notification message, the method further comprises:
receiving a congestion control restore message sent from the downstream device in response to that the downstream device detects the data transmission satisfying a preset condition, and terminating the congestion control operation according to the congestion control restore message.

8. The congestion control method according to claim 7, wherein the receiving the congestion control restore message sent from the downstream device in response to that the downstream device detects the data transmission satisfying the preset condition, and terminating the congestion control operation according to the congestion control restore message comprises:
receiving the congestion control restore message triggered by the downstream device in response to that the downstream device detects that a current queue length is less than a preset second threshold; and
terminating the congestion control operation according to the congestion control restore message to restore the transmission rate of the congestion flow.

9. A terminal, comprising: a memory, a processor and a congestion control program stored on the memory and executable on the processor, the congestion control program, executed by the processor, causing the congestion control method according to any of claims 1 to 8 to be implemented.

10. A storage medium having a congestion control program stored thereon, the congestion control program, executed by a processor, causing the congestion control method according to any of claims 1 to 8 to be implemented.
